# EUROPEAN PATENT SPECIFICATION

(11) **EP 3 801 934 B1**
(45) Date of publication and mention of the grant of the patent: **02.08.2023**
(21) Application number: 19733378.4
(22) Date of filing: 10.06.2019
(51) Int. Cl.: B07C 5/342

(54) **PROCESS AND SYSTEM FOR IN-LINE INSPECTION OF PRODUCT STREAM FOR DETECTION OF FOREIGN OBJECTS**
VERFAHREN UND VORRICHTUNG ZUR INSPEKTION EINES PRODUKTSTROMS UND ERKENNUNG VON FREMDKÖRPERN
PROCÉDÉ ET DISPOSITIF D'INSPECTION D'UN FLUX DE PRODUITS POUR IDENTIFIER DES CORPS ÉTRANGER

(30) Priority: 11.06.2018 US 201862683308 P; 01.02.2019 US 201962799957 P
(43) Date of publication of application: 14.04.2021
(73) Proprietor: Cryovac, LLC, Charlotte, NC 28208 (US)
(72) Inventor: SCHMIDT, Andreas, Charlotte, North Carolina 28278 (US); WEBB, Lewis, Spartanburg, South Carolina 29316 (US); JOHNSON, Keith, Box Elder, Utah 84324 (US); ROSS, Chelsea, Charlotte, North Carolina 28217 (US)
(74) Representative: Uexküll & Stolberg
(86) International application number: PCT/US2019/036301
(87) International publication number: WO 2019/241114

(56) References cited:
- US-A1- 2016 187 199

## Description

### FIELD

The present invention relates to a process and system for inspecting a food product stream for quality assurance, to ensure that the product stream is free of foreign objects.

### BACKGROUND

Many products, including various foods, are processed on large scale in packing plants. Such plants deliver economic benefit and high quality product through the ability to quickly process a large number of food items in a controlled environment.

Foreign objects may find their way onto conveyer belts transporting food products in processing plants. These include, but are not limited to, plastic pieces from films or tape, pieces of conveyer belts, rubber pieces, wood splinters, metal pieces, insects, textiles, latex and nitrile gloves and pieces thereof, etc. The presence of foreign objects in a food product stream is detrimental the quality of the product. If a foreign object is missed by an inspector, and it finds its way to the end consumer, costly recalls may be issued.

Many food processors run their products through metal detectors to identify ferrous materials, but this is not sufficient. Some use x-ray machines. For the most part, food processors use employees to manually inspect their food products as they inspect the food product stream, looking for any foreign materials which may be present.

US 2016/0187199 A1 discloses a process comprising the steps of the preamble of claim 1, and a system comprising the features of the preamble of claim 10.

It would be desirable to provide an automated system that would improve operational efficiency and quality control and reduce labor costs. It would also be desirable to have an automated process capable of detecting the presence and location of a wide variety of foreign objects in a food product stream. It would also be desirable to provide a detection system that is capable of detecting a foreign object of a type that has not previously been programmed into the detection system. It would also be desirable to provide a detection system that is capable of detecting foreign objects down to a relatively small size, to ensure the purity of the food product stream.

### SUMMARY

The invention is defined by the process according to claim 1 and the system according to claim 10, in particular :
A first aspect is directed to a process for detecting foreign objects present in a stream comprising a food product. The process comprises: A) forwarding a product stream comprising the food product; B) illuminating the product stream with incident electromagnetic energy; C) generating raw data based on electromagnetic energy reflected from the product stream, using a camera, and D) processing the raw data with a machine learning classification algorithm with regression analysis to form image data. The processing of the raw data includes unsupervised learning comprising grouping pixels into similar categories by their spectra. The processing of the raw data generates classified data by: (i) classifying a first portion of the raw data as corresponding with the food product. According to the present invention the processing of the raw data including unsupervised learning comprising grouping pixels into similar categories by their spectra to generate classified data further includes (ii) classifying a second portion of the raw data as corresponding with the foreign objects; and (iii) classifying a third portion of the raw data as corresponding with background which is behind the product stream. According to the present invention the process further comprises E) removing the foreign object from the product stream.

Preferred embodiments of the process are set out in dependent claims 2-9.

A second aspect is directed to a system for detecting a foreign object present in a product stream comprising a food product. The system comprises: A) a forwarding device configured to forward the product stream; B) an illuminator configured to generate incident electromagnetic energy and to direct the electromagnetic energy against the product stream; C) a camera arranged to generate raw data based on reflected electromagnetic energy from the product stream; and D) instructions stored in memory to form image data from the raw data using a machine learning classification algorithm with regression analysis and including unsupervised learning comprising grouping pixels into similar categories by their spectra, in order to generate classified data, wherein the instructions, in response to execution by a processor, cause the processor to: (i) classify a first portion of the raw data as corresponding with the food product. According to the present invention the instructions, in response to execution by the processor, further cause the processor: (ii) classify a second portion of the raw data as corresponding with the foreign object; and (iii) classify a third portion of the raw data as corresponding with a background which is behind the product stream. According to the present invention the system is configured to remove the foreign product from the product stream.

Preferred embodiment s of the system are defined in dependent claims 11-15.

### BRIEF DESCRIPTION OF THE DRAWING

The foregoing aspects and many of the attendant advantages of the disclosed subject matter will become more readily appreciated as the same become better understood by reference to the following detailed description, when taken in conjunction with the accompanying drawings, wherein:
FIG. 1 is a flow diagram of a process for in-line inspection of product stream for detection of foreign objects.
FIG. 2 is a flow diagram of a process for in-line inspection of product stream for detection of foreign objects.
FIG. 3 is a perspective view of a system configured to carry out the process of detecting foreign objects in a product stream.
FIG. 4 is a perspective view of another system configured to carry out the process of detecting foreign objects in a product stream.
FIG. 5 depicts an example embodiment of a system that may be used to implement some or all of the embodiments described herein.
FIG. 6 depicts a block diagram of an embodiment of a computing device, in accordance with the embodiments described herein.

### DETAILED DESCRIPTION

As used herein, the term "background" refers to any light captured by the camera from within the field of view of the camera, which light is reflected from an area behind and surrounding the product stream which includes the food product and any foreign objects which may be present. Examples of backgrounds include a conveyor belt and a static background behind a product stream which is falling through the air.

As used herein, the term "product stream" refers to any one or more of the following: objects proceeding on a conveyor belt; objects falling from one location to another; objects transported in a liquid or a gas.

As used herein, the term "camera" includes all types of cameras, including monochromatic, red green blue ("RGB"), charge coupled device ("CCD"), complementary metal-oxide-semiconductor ("CMOS"), indium gallium arsenide ("InGaAs"), line scan, area scan, hyperspectral, multispectral, and others. In an embodiment, the camera is a hyperspectral camera. In an embodiment, the camera is a hyperspectral line scan camera, also referred to as a "pushbroom" camera. In another embodiment, the hyperspectral camera is an area scan camera, also referred to as a "snapshot" camera. In another embodiment, the hyperspectral camera is a whiskbroom camera.

As used herein, the phrase "hyperspectral camera" includes cameras that measure at least 5 spectral bands, as opposed to the human eye, monochromatic cameras, and RGB cameras. Hyperspectral cameras include conventional hyperspectral cameras which measure contiguous spectral bands, as well as multispectral cameras which measure spaced spectral bands. Similarly, the phrase "hyperspectral imaging" refers to imaging with a hyperspectral camera as included herein, i.e., conventional hyperspectral imaging (contiguous spectral bands) or multispectral imaging (spaced spectral bands).

As used herein, the phrase "assigning an identity" as applied to data points (as well as images made from the data points, and objects corresponding with the data points) refers to classifying the data points as corresponding with (i) meat, (ii) a conveyor belt or other background (including out-of-focus background) behind objects being scanned, or (iii) a foreign object. The assigned identity may be more specific than just meat or background or foreign object. For example, meat may be identified as including both lean muscle tissue (red) and fatty tissue (white), and may even be broken down into a spectrum running from lean to fat, including various grades between. Foreign objects may be further assigned an identity according to the type of material, e.g., metal, plastic, fabric, stone, etc.

As used herein, "classified data" refers to data that has been assigned an identity such as (i) meat, (ii) a conveyor belt or other background behind objects being scanned, or (iii) a foreign object.

As used herein, the phrase "foreign object" refers to any object which is in the stream of meat pieces which is not intended to be consumed. Foreign objects include at least one member selected from the group consisting of wood, metal, cloth, plastic, stone, dirt, offal, etc.

Hyperspectral Imaging (HSI) technology is capable of identifying various objects that may be found in food streams, including streams containing pieces of meat, such as beef, pork, lamb, poultry or other processing plants. It has been found that HSI can distinguish pieces of meat from a wide variety of different foreign materials travelling in a product stream, e.g., on a conveyer belt, or other means of forwarding a product stream. HSI can be used in real time at conventional processing speeds and can provide a whole-surface analysis that provides information which similar to a combination of photographic imaging and spectroscopic imaging, with these imaging systems operating in the ultraviolet, infrared, and/or visible ranges.

However, unlike conventional or other spectroscopy methodologies that are only capable of sampling electromagnetic energy intensities at different wavelengths without any spatial information, HSI combines both spectral and spatial imaging by overlaying all of the information into one image. This spatial information serves to provide location information of where the spectral information is coming from. Each individual pixel in the image contains a spectrum (electromagnetic energy intensity vs. wavelength) captured in individual wavebands, with image resolution being spatial resolution and the width of the waveband being spectral resolution. In other words, each individual pixel in a hyperspectral image contains a full spectrum of reflected electromagnetic energy intensity across a large wavelength range collected in narrow wavelength bands.

Typical HSI applications form images utilizing a wavelength capability divided into several hundred wavebands. A single pixel in the hyperspectral image can be individually analyzed, classified, and differentiated across the entire range of wavelengths. This enables identification of objects based on spectral differences that can be small.

Mathematical operations can be used to automatically classify the spectra contained in each pixel. Spectra can be identified via comparison to a previously known standard. For example, if a pixel's spectrum matches the spectrum of a piece of meat, it can be classified as meat. Other pixels exhibiting different spectra can be classified as non-meat, or more specifically, a material different from meat, such as plastic, metal, wood, etc.

The types of cameras which may be used in the process include line scan cameras (also referred to as pushbroom cameras), snapshot cameras, and whiskbroom cameras. Although images may be captured via reflectance from the product stream, images may also be captured via transmission, transflection, scattering, or fluorescence, rather than reflectance modes. Although two or more cameras may be used to obtain images from a single product stream, only one camera is required.

One useful type of line scan camera is a visible and near infra-red line scan camera (VNIR line scan camera), which captures reflectance spectra in the 400 nm to 1000 nm wavelength range. Also useful is an infrared line scan camera (IR line scan camera) that captures reflectance spectra in the 900nm to 1700 nm range. Both the VNIR and IR line scan cameras are capable of distinguishing meat from foreign objects.

The analysis of the spectral data acquired by the camera is another feature of the process disclosed herein. The analysis of the spectral data can be carried out using multivariate analysis techniques. Multivariate analysis techniques and algorithms that may be used to analyze and classify images include, but are not limited to: Vector (or spectral) angle analysis, Euclidian distance, principle component analysis/regression, Fisher discriminant analysis, cluster analysis, logistic regression, decision trees, ensemble methods, neural networks, as well as a variety of machine learning algorithms and custom written algorithms.

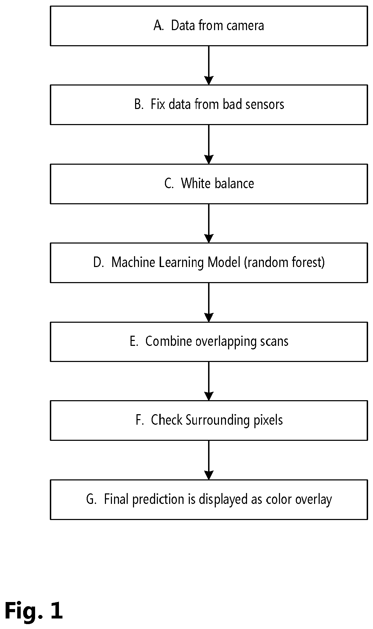

FIG. 1 is a flow diagram of a process for in-line inspection of product stream for detection of foreign objects. In step A, image data is acquired by the camera of a type as described above. The image data includes, in each pixel, the intensity of reflected electromagnetic energy, the intensity being measured in wavebands within a specified wavelength range.

In step B, regardless of whether the camera is a line scan camera (or other camera), image data obtained by the camera usually includes data from pixels having defective wavebands. The resulting defective data is corrected by averaging surrounding non-defective wavebands, i.e., by interpolating between non-defective wavebands surrounding the defective wavebands. Each line can have, for example, 640 pixels, with each pixel obtaining data for each of 224 wavebands spread across a wavelength range of 900-1700 nanometers ("nm"). In an embodiment, each pixel obtains data for wavebands spread across 900-2500 nm.

In step C, a white balance normalization is conducted. Every pixel in the camera has a slightly different sensitivity to electromagnetic energy. Further, the lighting setup can have significant bright/dark spots across the entire image viewed by the camera. It is therefore necessary to mathematically adjust the incoming data stream to account for the variability in the reflected electromagnetic energy coming to the detector. The white balance normalizes the data so that an image of a uniform background appears uniform without bright or dark spots, thereby removing electromagnetic energy intensity as a variable.

In step D, a machine learning model (e.g., random forest) is employed. A machine learning classification algorithm is used to predict whether the incoming spectra from each pixel came from a material that is intended to be present in the product stream (i.e., meat, fat, conveyor, etc.) or a foreign material not intended to be present in the product stream (e.g., metal, plastic, wood, etc.). A random forest model with 10 estimators may be used as the classification algorithm. However, many other options are available such as a logistic regression model, neural network, or clustering algorithm. The algorithm creates a binary prediction for each pixel. After this step, the incoming data is no longer used for the final prediction.

In step E, overlapping scans are combined for the purpose of assuring that the report of the presence of a foreign object is correct, i.e., to reduce the occurrence of false positives. These correlated or overlapping scans are combined by segmenting the scans into groups based on the number of scans that are correlated. For example, if the camera is set to scan 5 times faster than the rate necessary to produce an image with true-to-life aspect ratios, then every 5 lines scans will be considered together and reduced to a single scan of data to be displayed for the image and a single set of predictions to overlay on the image. The middle scan is chosen to be displayed, while the others are discarded. The classifications or predictions are combined by taking the sum of the binary predictions for each pixel across the width of the belt. For example, a line scan of 640 pixels scanning at a rate 5 times faster than necessary will result in 640*5 predictions from the classification algorithm. These will be reduced to an array of length 640 by taking the sum across the lines. These sums are converted to a binary prediction using an adjustable threshold. Numbers in the sum array less than the threshold are set to 0 while values in the array greater than or equal to the threshold are set to 1.

In step F, surrounding pixels are checked in order to further reduce false positives. In the case of a line scan camera, three lines of predictions can be analyzed at the same time. For the middle row of pixels, if there is a prediction of 1 (foreign material), a 3 by 3 square of pixels surrounding this pixel are considered. If the sum of the 9 predictions in this square is greater than an adjustable threshold, the pixel in consideration retains its foreign material designation. Otherwise, it is changed to 0 (acceptable material).

Steps E and F can be used in singly or in combination. Each serves to reduce false positives. When used in combination, both the overlapping scans analysis of step E and the surrounding pixels scan of Step F must indicate the presence of a foreign object before the system as a whole indicates the presence of a foreign object.

In step G, a final prediction is displayed as color overlay. In step H, final predictions are converted to an image with a prediction of 1 (foreign material) being red and a prediction of 0 (acceptable material) being green. If a line scan camera is used, the line scans of data reserved from step F (overlapping scans) are converted to a red-green-blue image (RGB image) by selecting 3 spectral bands to be displayed as red, green, and blue. These two RGB images are overlayed with an adjustable opacity and displayed to the user to highlight where foreign objects are located in the product on the belt.

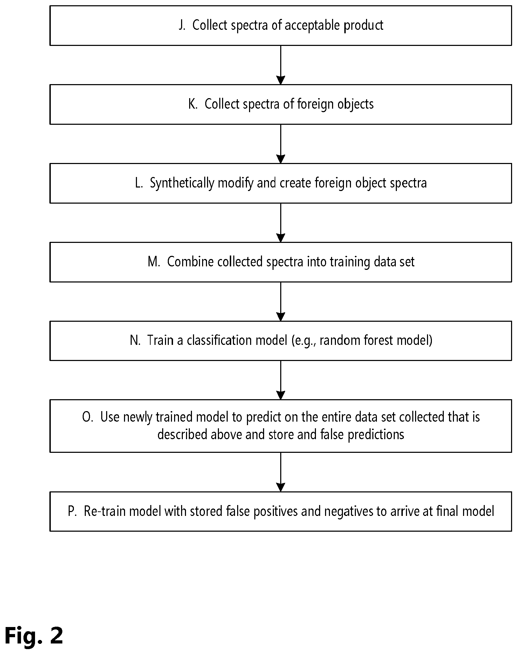

FIG. 2 is a flow diagram of a process steps J-P for training the system to process the data. The training includes use of a labeled training set of pixels obtained from food, foreign objects, and background. In step J, a dataset of acceptable product was collected and saved. The acceptable products included the conveyor belt (i.e., "background" data) used to transport the meat trimmings ("trims" which generate "food" data), as well as the trims themselves. Many different types of trims pass through inspection daily, on the same conveyor. Therefore, many different datasets were collected to capture the spectral variety found in the trims. Some of the collected data was used for the training of the model (described below) while additional data was set aside for later use. The data in this set was labeled "0," representing acceptable product.

In step K, commonly found foreign objects were placed on a uniformly-colored background and reflectance spectra of the objects were captured. Unsupervised machine learning was used to separate the pixels containing data from foreign objects from those containing the data of the uniform background to obtain the reflectance spectra of the foreign objects. Spectra corresponding to this data set were labeled "1," representing unacceptable product, i.e., objects foreign to, and to be separated from, the desired food product in the stream.

In step L, additional foreign object data was simulated. Simulation methods included artificially brightening/darkening the previously collected foreign object spectra, addition of random noise to the spectra, creation of random spectra, and blurring of foreign object data with acceptable product data at a desired ratio, e.g., addition of 10% acceptable product.

In step M, training sets for acceptable and unacceptable products were combined. Due to the imbalance of the dataset size between the acceptable and unacceptable products, with the acceptable being in the majority, the unacceptable products data was added multiple times until the desired ratio of acceptable/unacceptable spectra was achieved (e.g., 3 to 2 ratio).

In step N, the newly-generated dataset was used to train a prediction model using a classification algorithm. Although other classification algorithms could have been used, a random forest algorithm was selected.

In step O, the prediction model was then tested on the entire dataset collected previously. False positive and false negative predictions were saved.

In step P, the previously recorded false positive and false negative prediction data was added to the original prediction model numerous times to train a more robust second prediction model. This final model was used for classifying all new data recorded by the camera as either acceptable or unacceptable product.

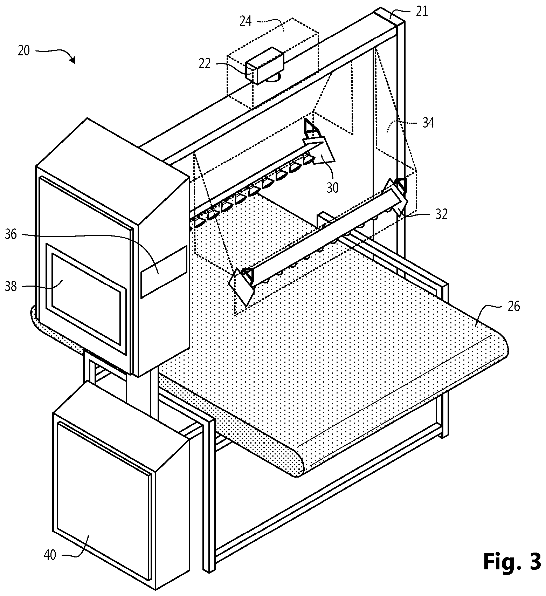

FIG. 3 illustrates a perspective view of a system 20 configured to carry out the process of FIG. 1. As illustrated in FIG. 2, hyperspectral imaging (HSI) camera 22, mounted on frame located inside wash-down enclosure 24, is directed downward towards conveyor 26. First lamp bank 30 and second lamp bank 32 are oriented below camera 22. Each lamp bank contains a plurality of lamps, e.g., eleven halogen lights each, with lamp banks 30 and 32 being covered by light cover 34. The eleven halogen bulbs in each of lamp banks 30 and 32 direct light downward onto the product stream (not illustrated) as it progresses on the conveyor, through the field of view of downwardly facing camera 22 which generates data from the light reflected from the product stream and the surface of conveyor 26 as background.

The system is operated via controls on control panel 36. Data from HSI camera 22 are fed to computer (not illustrated) which processes the data to provide an image (not illustrated) showing the product stream together with any foreign objects present in the stream, with an indication of which portion is product and which portion corresponds with foreign objects. Screen 38 provides this image of the product stream including an indication of the portion of the product stream that corresponds with food product as well as the portion of the stream that corresponds with foreign objects, to aid in removal of any foreign objects that are detected within the product stream. Electrical panel 40 provides the wiring to power and electrically integrate camera 22, conveyor 26, lamp banks 30 and 32, control panel 36, screen 38, the data processing computer (not illustrated), and any further components of the system. Although not illustrated, a light is provided on top of the box housing control panel 36 and screen 38. The light is programmed to be green so long as no foreign object is detected, changing to red when a foreign object is detected.

System 20 may further include an automated foreign object separator (not illustrated) configured to automatically remove a foreign object from the product stream. The automated foreign object separator could be, for example: (i) a robotic arm capable of plucking the foreign object from the product stream, or (ii) a gas or liquid blower which blows the foreign out of the product stream, or (iii) a sweeping device that sweeps the foreign object out of the product stream, or (iv) a vacuum nozzle that evacuates the foreign object from the product stream or picks up the foreign object and deposits it in a location out of the product stream. Still further automatically controllable foreign object separators could be utilized, as would be apparent to those of skill in the art.

System 20 is designed with support structures and casings that are washable with water under pressure, with or without soap and/or antimicrobial agents. Light cover 34 is provided with baffles to allow cooling air to flow through while allowing cover 34 to be washed down with the water under pressure, without the coming into contact with lamp banks 30 and 32.

Upon detection of a foreign object, the system is designed to automatically stop the forwarding of the product stream after the foreign object clears the downstream lamp bank 32. Although system 20 is designed for automated detection of foreign objects, upon detection of a foreign object and stopping of the conveyor, the system is designed for manual removal of the foreign object from the product stream. Locating the foreign object is assisted by an image including the pieces of meat and the foreign object on screen 38. In addition, an operator writes up a written report for each foreign object found.

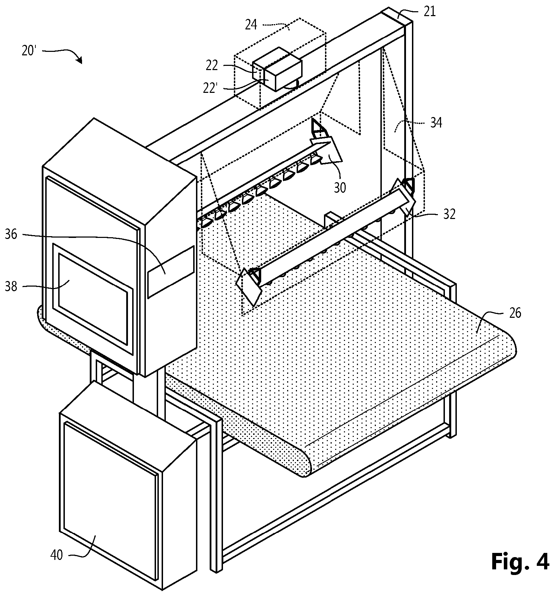

FIG. 4 illustrates a perspective view of a system 20' that is a variation of the system 20 shown in FIG. 3. Similar to the system 20, the system 20' includes the HSI camera 22 mounted on the frame 21 located inside wash-down enclosure 24. In system 20', a visible light camera 22' is also located inside of the wash-down enclosure 24. The other remaining components of the system 20' that have the same reference numbers and the components of the system 20 are the same or similar to those components of the system 20.

In some embodiments, the HSI camera 22 in the system 20' is configured to take images at wavelengths between 900nm and 1700nm. In the depicted embodiment, the visible light camera 22' is configured to take images within the visible range corresponding to visible light wavelengths. In some embodiments, the visible light camera 22' is an RGB camera configured to take images within wavelengths corresponding to red, green, and blue light. In other embodiments, the visible light camera 22' can be replaced by another camera that takes images at one or more different wavelength regions. In the depicted embodiment, both of the HSI camera 22 and the visible light camera 22' are in communication with the control panel 36 and send image data to the control panel 36. The data from the HSI camera 22 can be processed as described in other embodiments herein. The image data from the visible light camera 22' can be processed using a color detection algorithm that distinguishes different colors found in the visible spectrum of light. The image data from each of the HSI camera 22 and the visible light camera 22' can be classified (e.g., classified either as being acceptable or as containing a foreign object) and the classified images can be combined and shown as a final image result.

The inclusion of the visible light camera 22' in the system 20' has some advantages over the system 20. In some embodiments, the visible light camera 22' can have significantly better resolution compared to the HSI camera 22. In some examples, the visible light camera 22' can have a resolution of at least 4096 pixels (e.g., in a 762 mm field of view) while the HSI camera 22 includes less than or equal to one or more of 1280 pixels or 640 pixels. The higher resolution of the RGB camera enables the detection of very small foreign objects (e.g., foreign objects that are smaller than or equal to 1 mm x 1 mm). In some embodiments, the visible light camera 22' may be able to detect particular foreign materials more easily than the hyperspectral camera 22. Understanding this ease of detection, the control unit 36 can programmed to process the image data of the visible light camera 22' for those particular foreign materials and not process the image data from the HSI camera 22 for those particular foreign materials. The allows a classified model for the HSI camera 22 to exclude those particular foreign objects when the model is being trained, which improves the accuracy of the model for the HSI camera 22 when inspecting for other foreign objects. In some embodiments, the improved classification model results in fewer false positives and/or fewer false negatives. In one particular example, image data from the visible light camera 22' can easily detect objects of certain colors in a stream of meat and/or fat travelling on a white conveyor; however, the visible light camera 22' may not detect a white object in that same stream. Conversely, the HSI camera 22 can distinguish different white and/or black objects based on the reflections in the infrared spectrum, but has difficulty differentiating between objects that have similar reflectance in the infrared spectrum even when those objects are colored differently in the visible spectrum. For example, the HSI camera 22 may have difficulty differentiating between an object and fat/meat content of a food product where the object and the fat/meat content have similar reflectance in the infrared spectrum despite the object having a different color than the fat/meat content in the in the visible spectrum.

In the depicted embodiment, the HSI camera 22 and the visible light camera 22' are proximate to each other in the direction of motion of the conveyor 26. In other words, the product on the conveyor 26 would pass underneath one of the HSI camera 22 and the visible light camera 22' and then under the other of the HSI camera 22 and the visible light camera 22'. In some embodiments, the HSI camera 22 and the visible light camera 22' are mounted at angles that are not perfectly perpendicular to the conveyor 26 so that the HSI camera 22 and the visible light camera 22' are directed at approximately the same spot on the conveyor 26. Regardless of the angles of the HSI camera 22 and the visible light camera 22', any offset in the image data taken by the HSI camera 22 and the visible light camera 22' can be compensated during image processing (e.g., by the control unit 36) so that the image data from each of the HSI camera 22 and the visible light camera 22' can be overlaid into one seamless image for display.

### Example

Beef trimmings ("trims") were conveyed at 5.5 cm/s (11 ft /min) on a 76 cm (30in.) wide white plastic conveyor belt which passed through the foreign object detection system. The individual trim pieces varied widely in lean-to-fat ratio and in size range, i.e., from large (> 2.3 kg (5lbs)) to small (< 28 g (1 oz.)) sizes. Furthermore, the trims varied in shape, thickness, and water content. Some trims were partially or wholly frozen.

The beef trims were first loaded onto, and spread out evenly across, a 76 cm (30") wide conveyor belt which moved at 5.5 cm/s (11 ft /min). The trims were not stacked more than 10 cm (4in.) tall as they were being conveyed under the banks of lamps and through the field of view of the HSI line scan hyperspectral camera. The belt which fed the product stream through the foreign object detection system was intentionally selected to have a different color from the conveyor belts which were upstream in the processing of the food product. In this manner, the foreign object detection system could distinguish between the background color of the belt feeding the product stream through the field of vision of the camera, and any foreign objects corresponding with pieces of upstream conveyor belts. Furthermore, the conveyor belt which fed the product stream through the field of vision of the camera could have been a two-tone belt (having different top and bottom surface colors) or three-tone belt (different top, middle, and bottom colors) to enable the system to detect broken conveyor pieces originating from the belt at the inspection station.

The foreign object detection system illuminated the product stream with 2 banks of 11 halogen lights aligned perpendicular with the flow of product, with the light bulbs being evenly spread across the width of the belt. Two waterproof banks of lights were present, each containing 11 halogen bulbs. Halogen lights were chosen due to their low cost and light output in the near infrared range. The position of the light banks was adjustable in a direction perpendicular to the motion of the conveyor belt. Further, the angle of incidence of light could also be adjusted. This design reduced shadows and uneven lighting.

A line-scan SPECIM FX17 NIR hyperspectral camera, having a 38 degree field of view lens, was mounted above the conveyor belt. Within its field of view, in each of its 640 spatial pixels, the camera captured reflectance intensities from 29 unique wavelength bands (even though the camera is capable of collecting 224 discrete wavelength bands for each pixel) in the wavelength range of 900nm to 1700nm. The 640 spatial pixels were placed and adjusted to span a field of view across the 76 cm (30 inch) conveyor belt, leading to a theoretical detection limit of about 1.1 mm².

Although the camera had a theoretical maximum frame rate of 670 frames per second when collecting all bands (or up to 15,000 frames per second when collecting four bands), the actual scan speed was lower because the eleven ft. /min rate of conveyor movement necessitated a scan rate of 39 frames per second, in order to acquire images that were not distorted. Faster scan rates (e.g. 3x that speed) could have been used to collect more information in the plane of movement of the object. This technique is useful to verify the classification of an object; e.g. in the case of collecting at 3x the necessary frame rate, three pixels in a row are predicted on and then combined into one output pixel to maintain the aspect ratio. In this example, one can set the threshold of predicting a foreign object in the output pixel if three pixels in a row were classified as foreign material.

A touch screen was used to control the system. From this screen, the operator could start/stop/reset the machine, log foreign objects found, and change various settings. Starting the machine from the touch screen started the entire process including turning the lights on, starting the conveyor belt, and starting image acquisition. Alerts of a foreign object found were also shown on the touch screen.

A second screen was used to display video information of the product stream on the conveyor. Here, images of the product and background (e.g., meat, fat, conveyor, etc.) were shown overlaid with a green color whereas foreign objects (wood, rubber, etc.) were overlaid with a red color. The screen could be used to identify the location of the foreign object in combination with the timed stop of the conveyor belt as described above.

The computer was stored in a waterproof enclosure. The computer was designed to start the foreign object detection program automatically after power-on. The camera was controlled via C++ programming (using VISUAL STUDIO 2017 as a compiler) and the analysis of the data was conducted in PYTHON (version 3.6), as is the communication with the human machine interface ("HMI"). The computer did all the processing on its central processing unit (INTEL i7-7700t processor). An alternative to this central processing unit could be a graphics processing unit ("GPU") such as a NVIDEA 1080 GTX.

The frame and all enclosures were made from stainless steel construction designed to withstand power washing and the environment found in a meat processing plant.

The raw data generated by the camera was sent to the computer for analyzing and processing. The raw data was normalized through a white balancing process. Defective pixels were then corrected. The data was then classified (via a classification algorithm) as either (i) OK (corresponding with beef trims or as conveyor background) or (ii) a foreign object.

While the food product included pieces of meat and fat detected, foreign objects included any material that was neither lean meat nor fat, nor the conveyor belt on which the product was being conveyed. The resulting classifications were shown on the computer screen on the machine.

When a foreign object was detected, it was highlighted in red and a yellow square was shown around the object on the screen. The system was designed to identify the location of the object and stop the process flow from continuing a specified amount (the amount could be changed via HMI) of time after detection, so that the foreign object was easy to find and remove. Upon detection of a foreign object in the product stream, a red warning light on top of the machine was turned on and the conveyor belt is stopped a specified amount of time after the detection event. Once the foreign object was found and removed, a user reset the system by logging the foreign object event on the HMI. The system then automatically resumed forwarding the product stream until the next foreign object was detected, at which time the process repeated itself.

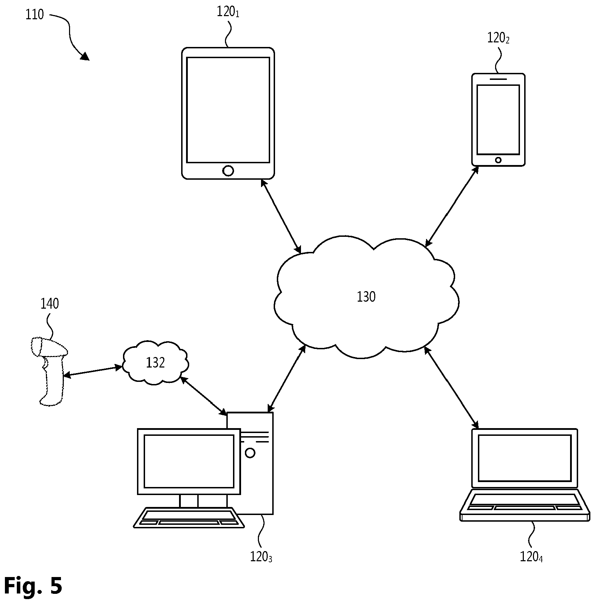

FIG. 5 depicts an example embodiment of a system 110 that may be used to implement some or all of the embodiments described herein. In the depicted embodiment, the system 110 includes computing devices 120₁, 120₂, 120₃, and 120₄ (collectively computing devices 120). In the depicted embodiment, the computing device 120₁ is a tablet, the computing device 120₂ is a mobile phone, the computing device 120₃ is a desktop computer, and the computing device 120₄ is a laptop computer. In other embodiments, the computing devices 120 include one or more of a desktop computer, a mobile phone, a tablet, a phablet, a notebook computer, a laptop computer, a distributed system, a gaming console (e.g., Xbox, Play Station, Wii), a watch, a pair of glasses, a key fob, a radio frequency identification (RFID) tag, an ear piece, a scanner, a television, a dongle, a camera, a wristband, a wearable item, a kiosk, an input terminal, a server, a server network, a blade, a gateway, a switch, a processing device, a processing entity, a set-top box, a relay, a router, a network access point, a base station, any other device configured to perform the functions, operations, and/or processes described herein, or any combination thereof.

The computing devices 120 are communicatively coupled to each other via one or more networks 130 and 132. Each of the networks 130 and 132 may include one or more wired or wireless networks (e.g., a 3G network, the Internet, an internal network, a proprietary network, a secured network). The computing devices 120 are capable of communicating with each other and/or any other computing devices via one or more wired or wireless networks. While the particular system 110 in FIG. 5 depicts that the computing devices 120 communicatively coupled via the network 130 include four computing devices, any number of computing devices may be communicatively coupled via the network 130.

In the depicted embodiment, the computing device 120₃ is communicatively coupled with a peripheral device 140 via the network 132. In the depicted embodiment, the peripheral device 140 is a scanner, such as a barcode scanner, an optical scanner, a computer vision device, and the like. In some embodiments, the network 132 is a wired network (e.g., a direct wired connection between the peripheral device 140 and the computing device 120₃), a wireless network (e.g., a Bluetooth connection or a WiFi connection), or a combination of wired and wireless networks (e.g., a Bluetooth connection between the peripheral device 140 and a cradle of the peripheral device 140 and a wired connection between the peripheral device 140 and the computing device 120₃). In some embodiments, the peripheral device 140 is itself a computing device (sometimes called a "smart" device). In other embodiments, the peripheral device 140 is not a computing device (sometimes called a "dumb" device).

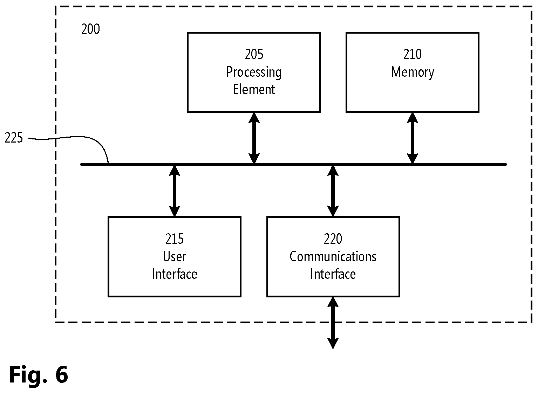

Depicted in FIG. 6 is a block diagram of an embodiment of a computing device 200. Any of the computing devices 120 and/or any other computing device described herein may include some or all of the components and features of the computing device 200. In some embodiments, the computing device 200 is one or more of a desktop computer, a mobile phone, a tablet, a phablet, a notebook computer, a laptop computer, a distributed system, a gaming console (e.g., an Xbox, a Play Station, a Wii), a watch, a pair of glasses, a key fob, a radio frequency identification (RFID) tag, an ear piece, a scanner, a television, a dongle, a camera, a wristband, a wearable item, a kiosk, an input terminal, a server, a server network, a blade, a gateway, a switch, a processing device, a processing entity, a set-top box, a relay, a router, a network access point, a base station, any other device configured to perform the functions, operations, and/or processes described herein, or any combination thereof. Such functions, operations, and/or processes may include, for example, transmitting, receiving, operating on, processing, displaying, storing, determining, creating/generating, monitoring, evaluating, comparing, and/or similar terms used herein. In one embodiment, these functions, operations, and/or processes can be performed on data, content, information, and/or similar terms used herein.

In the depicted embodiment, the computing device 200 includes a processing element 205, memory 210, a user interface 215, and a communications interface 220. The processing element 205, memory 210, a user interface 215, and a communications interface 220 are capable of communicating via a communication bus 225 by reading data from and/or writing data to the communication bus 225. The computing device 200 may include other components that are capable of communicating via the communication bus 225. In other embodiments, the computing device does not include the communication bus 225 and the components of the computing device 200 are capable of communicating with each other in some other way.

The processing element 205 (also referred to as one or more processors, processing circuitry, and/or similar terms used herein) is capable of performing operations on some external data source. For example, the processing element may perform operations on data in the memory 210, data receives via the user interface 215, and/or data received via the communications interface 220. As will be understood, the processing element 205 may be embodied in a number of different ways. In some embodiments, the processing element 205 includes one or more complex programmable logic devices (CPLDs), microprocessors, multi-core processors, co processing entities, application-specific instruction-set processors (ASIPs), microcontrollers, controllers, integrated circuits, application specific integrated circuits (ASICs), field programmable gate arrays (FPGAs), programmable logic arrays (PLAs), hardware accelerators, any other circuitry, or any combination thereof. The term circuitry may refer to an entirely hardware embodiment or a combination of hardware and computer program products. In some embodiments, the processing element 205 is configured for a particular use or configured to execute instructions stored in volatile or nonvolatile media or otherwise accessible to the processing element 205. As such, whether configured by hardware or computer program products, or by a combination thereof, the processing element 205 may be capable of performing steps or operations when configured accordingly.

The memory 210 in the computing device 200 is configured to store data, computer-executable instructions, and/or any other information. In some embodiments, the memory 210 includes volatile memory (also referred to as volatile storage, volatile media, volatile memory circuitry, and the like), non-volatile memory (also referred to as non-volatile storage, non-volatile media, non-volatile memory circuitry, and the like), or some combination thereof.

In some embodiments, volatile memory includes one or more of random access memory (RAM), dynamic random access memory (DRAM), static random access memory (SRAM), fast page mode dynamic random access memory (FPM DRAM), extended data-out dynamic random access memory (EDO DRAM), synchronous dynamic random access memory (SDRAM), double data rate synchronous dynamic random access memory (DDR SDRAM), double data rate type two synchronous dynamic random access memory (DDR2 SDRAM), double data rate type three synchronous dynamic random access memory (DDR3 SDRAM), Rambus dynamic random access memory (RDRAM), Twin Transistor RAM (TTRAM), Thyristor RAM (T-RAM), Zero-capacitor (Z-RAM), Rambus in-line memory module (RIMM), dual in-line memory module (DIMM), single in-line memory module (SIMM), video random access memory (VRAM), cache memory (including various levels), flash memory, any other memory that requires power to store information, or any combination thereof.

In some embodiments, non-volatile memory includes one or more of hard disks, floppy disks, flexible disks, solid-state storage (SSS) (e.g., a solid state drive (SSD)), solid state cards (SSC), solid state modules (SSM), enterprise flash drives, magnetic tapes, any other non-transitory magnetic media, compact disc read only memory (CD ROM), compact disc-rewritable (CD-RW), digital versatile disc (DVD), Blu-ray disc (BD), any other non-transitory optical media, read-only memory (ROM), programmable read-only memory (PROM), erasable programmable read-only memory (EPROM), electrically erasable programmable read-only memory (EEPROM), flash memory (e.g., Serial, NAND, NOR, and/or the like), multimedia memory cards (MMC), secure digital (SD) memory cards, Memory Sticks, conductive-bridging random access memory (CBRAM), phase-change random access memory (PRAM), ferroelectric random-access memory (FeRAM), non-volatile random access memory (NVRAM), magneto-resistive random access memory (MRAM), resistive random-access memory (RRAM), Silicon Oxide-Nitride-Oxide-Silicon memory (SONOS), floating junction gate random access memory (FJG RAM), Millipede memory, racetrack memory, any other memory that does not require power to store information, or any combination thereof.

In some embodiments, memory 210 is capable of storing one or more of databases, database instances, database management systems, data, applications, programs, program modules, scripts, source code, object code, byte code, compiled code, interpreted code, machine code, executable instructions, or any other information. The term database, database instance, database management system, and/or similar terms used herein may refer to a collection of records or data that is stored in a computer-readable storage medium using one or more database models, such as a hierarchical database model, network model, relational model, entity relationship model, object model, document model, semantic model, graph model, or any other model.

The user interface 215 of the computing device 200 is in communication with one or more input or output devices that are capable of receiving inputs into and/or outputting any outputs from the computing device 200. Embodiments of input devices include a keyboard, a mouse, a touchscreen display, a touch sensitive pad, a motion input device, movement input device, an audio input, a pointing device input, a joystick input, a keypad input, peripheral device 140, foot switch, and the like. Embodiments of output devices include an audio output device, a video output, a display device, a motion output device, a movement output device, a printing device, and the like. In some embodiments, the user interface 215 includes hardware that is configured to communicate with one or more input devices and/or output devices via wired and/or wireless connections.

The communications interface 220 is capable of communicating with various computing devices and/or networks. In some embodiments, the communications interface 220 is capable of communicating data, content, and/or any other information, that can be transmitted, received, operated on, processed, displayed, stored, and the like. Communication via the communications interface 220 may be executed using a wired data transmission protocol, such as fiber distributed data interface (FDDI), digital subscriber line (DSL), Ethernet, asynchronous transfer mode (ATM), frame relay, data over cable service interface specification (DOCSIS), or any other wired transmission protocol. Similarly, communication via the communications interface 220 may be executed using a wireless data transmission protocol, such as general packet radio service (GPRS), Universal Mobile Telecommunications System (UMTS), Code Division Multiple Access 2000 (CDMA2000), CDMA2000 1X (1xRTT), Wideband Code Division Multiple Access (WCDMA), Global System for Mobile Communications (GSM), Enhanced Data rates for GSM Evolution (EDGE), Time Division-Synchronous Code Division Multiple Access (TD-SCDMA), Long Term Evolution (LTE), Evolved Universal Terrestrial Radio Access Network (E-UTRAN), Evolution-Data Optimized (EVDO), High Speed Packet Access (HSPA), High-Speed Downlink Packet Access (HSDPA), IEEE 802.11 (WiFi), WiFi Direct, 802.16 (WiMAX), ultra wideband (UWB), infrared (IR) protocols, near field communication (NFC) protocols, Wibree, Bluetooth protocols, wireless universal serial bus (USB) protocols, or any other wireless protocol.

As will be appreciated by those skilled in the art, one or more components of the computing device 200 may be located remotely from other components of the computing device 200 components, such as in a distributed system. Furthermore, one or more of the components may be combined and additional components performing functions described herein may be included in the computing device 200. Thus, the computing device 200 can be adapted to accommodate a variety of needs and circumstances. The depicted and described architectures and descriptions are provided for exemplary purposes only and are not limiting to the various embodiments described herein.

Embodiments described herein may be implemented in various ways, including as computer program products that comprise articles of manufacture. A computer program product may include a non-transitory computer-readable storage medium storing applications, programs, program modules, scripts, source code, program code, object code, byte code, compiled code, interpreted code, machine code, executable instructions, and/or the like (also referred to herein as executable instructions, instructions for execution, computer program products, program code, and/or similar terms used herein interchangeably). Such non-transitory computer-readable storage media include all computer-readable media (including volatile and non-volatile media).

As should be appreciated, various embodiments of the embodiments described herein may also be implemented as methods, apparatus, systems, computing devices, and the like. As such, embodiments described herein may take the form of an apparatus, system, computing device, and the like executing instructions stored on a computer readable storage medium to perform certain steps or operations. Thus, embodiments described herein may be implemented entirely in hardware, entirely in a computer program product, or in an embodiment that comprises combination of computer program products and hardware performing certain steps or operations.

Embodiments described herein may be made with reference to block diagrams and flowchart illustrations. Thus, it should be understood that blocks of a block diagram and flowchart illustrations may be implemented in the form of a computer program product, in an entirely hardware embodiment, in a combination of hardware and computer program products, or in apparatus, systems, computing devices, and the like carrying out instructions, operations, or steps. Such instructions, operations, or steps may be stored on a computer readable storage medium for execution buy a processing element in a computing device. For example, retrieval, loading, and execution of code may be performed sequentially such that one instruction is retrieved, loaded, and executed at a time. In some exemplary embodiments, retrieval, loading, and/or execution may be performed in parallel such that multiple instructions are retrieved, loaded, and/or executed together. Thus, such embodiments can produce specifically configured machines performing the steps or operations specified in the block diagrams and flowchart illustrations. Accordingly, the block diagrams and flowchart illustrations support various combinations of embodiments for performing the specified instructions, operations, or steps.

For purposes of this disclosure, terminology such as "upper," "lower," "vertical," "horizontal," "inwardly," "outwardly," "inner," "outer," "front," "rear," and the like, should be construed as descriptive and not limiting the scope of the claimed subject matter. Further, the use of "including," "comprising," or "having" and variations thereof herein is meant to encompass the items listed thereafter and equivalents thereof as well as additional items. Unless limited otherwise, the terms "connected," "coupled," and "mounted" and variations thereof herein are used broadly and encompass direct and indirect connections, couplings, and mountings. Unless stated otherwise, the terms "substantially," "approximately," and the like are used to mean within 5% of a target value.

The embodiments described herein are to be regarded as illustrative rather than restrictive. It will be appreciated that variations and changes may be made by others, without departing from the scope of the present invention as defined by the accompanying claims.

## Claims

1. A process for detecting foreign objects present in a stream comprising a food product, the process comprising:
A) forwarding a product stream comprising the food product;
B) illuminating the product stream with incident electromagnetic energy;
C) generating raw data based on electromagnetic energy reflected from the product stream, using a camera (22, 22');
D) processing the raw data with a machine learning classification algorithm with regression analysis to form image data, the processing of the raw data including unsupervised learning comprising grouping pixels into similar categories by their spectra, in order to generate classified data by:
(i) classifying a first portion of the raw data as corresponding with the food product;
**characterized in that** the processing of the raw data including unsupervised learning comprising grouping pixels into similar categories by their spectra, in order to generate classified data further includes:
(ii) classifying a second portion of the raw data as corresponding with the foreign objects;
(iii) classifying a third portion of the raw data as corresponding with background which is behind the product stream; and
**in that** the process further comprises
E) removing the foreign objects from the product stream.

2. The process according to claim 1, wherein the generation of raw data by the camera (22, 22'), and the processing of the raw data, are carried out by taking multiple overlapping images of the product stream while the product stream is being forwarded, with the image data from the overlapping portions of the images being processed to determine whether data indicated as being a foreign object in a first image is also indicated as being the same foreign object in a corresponding portion of a second image that overlaps the first image, with the data processing only classifying as a foreign object corresponding data which is indicated as being the foreign object in both the first image and the second image.

3. The process according to any of claims 1 and 2, wherein the generation of raw data by the camera (22, 22'), and the processing of the raw data, are carried out using a minimum threshold size of at least 2 pixels in a 2 pixel by 2 pixel region;
optionally wherein the generation of raw data by the camera (22, 22'), and the processing of the raw data, are also carried out by taking multiple overlapping images of the product stream while the product stream is being forwarded, with the image data from the overlapping portions of the images being processed to determine whether data indicated as being a foreign object in a first image is also indicated as being the same foreign object in a corresponding portion of a second image that overlaps the first image, with the data processing only classifying as a foreign object: (i) corresponding data which is indicated as being the same foreign object in both the first image and the second image, which corresponding data meets (ii) a minimum threshold size of at least 2 pixels in a 2-pixel by 2-pixel region.

4. The process according to any of claims 1-3, wherein the machine learning classification algorithm also generates classified data from raw data after being trained on labeled training set of pixels obtained from food, foreign objects, and background.

5. The process according to any of claims 1-4, wherein a conveyor (26) is forwarding the product stream while the product stream is being illuminated by the incident electromagnetic energy, and while the camera (22, 22') is generating the raw data based on the electromagnetic energy being reflected from the product stream.

6. The process according to any of claims 1-5, wherein the camera (22, 22') is a near-infrared line scan hyperspectral camera (22);
optionally wherein the camera (22, 22') has at least 400 spatial pixels and a combination of the camera (22, 22') and the machine learning algorithm is capable of detecting foreign objects at a ratio down to at least as low as 0.2% of the field of view;
further optionally wherein the process uses only one camera.

7. The process according to claim 1, wherein the product stream comprises pieces of meat and the raw data generated by the camera (22, 22') is data taken from reflected electromagnetic energy in a wavelength range of 1200 to 1250 nm and/or 1500 to 1700 nm.

8. The process according to any of claims 1-7, wherein the product stream is forwarded by a first conveyor positioned above and upstream of a field of view of the camera (22, 22'), and the product stream is allowed to drop off of a downstream end of the first conveyor and onto a second conveyor (26) at a location downstream and below the field of view of the camera (22, 22'), with the camera (22, 22') generating raw data of the product stream as it falls from the first conveyor onto the second conveyor (26).

9. The process according to any of claims 1-8, wherein:
A) the forwarding of the product stream and the illuminating of the product stream and the generating of the raw data are carried out on a first system for detecting foreign objects in the product stream while the product stream is in a first configuration, including a first removal of any detected foreign objects from the product stream while the product stream in is the first configuration, followed by
B) reconfiguring the product stream into a second configuration, followed by
C) forwarding the product stream in the second configuration through a second system for detecting foreign objects in the product stream while the product stream is in the second configuration, including a second removal of any detected foreign objects from the product stream while the product stream in is the second configuration.

10. A system for detecting a foreign object present in a product stream comprising a food product, the system comprising:
A) a forwarding device configured to forward the product stream;
B) an illuminator (30, 32) configured to generate incident electromagnetic energy and to direct the electromagnetic energy against the product stream;
C) a camera (22, 22') arranged to generate raw data based on reflected electromagnetic energy from the product stream;
D) instructions stored in memory to form image data from the raw data using a machine learning classification algorithm with regression analysis and including unsupervised learning comprising grouping pixels into similar categories by their spectra, in order to generate classified data, wherein the instructions, in response to execution by a processor, cause the processor to:
(i) classify a first portion of the raw data as corresponding with the food product;
**characterized**
**in that** the instructions, in response to execution by the processor, further cause the processor to:
(ii) classify a second portion of the raw data as corresponding with the foreign object;
(iii) classify a third portion of the raw data as corresponding with a background which is behind the product stream;
and **in that** the system is arranged to remove the foreign object from the product stream.

11. The system according to claim10, wherein the forwarding device comprises a conveyor belt (26);
optionally wherein the conveyor belt (26) is a first conveyor belt having a first color, and the system further comprises a second conveyor belt upstream of the first conveyor belt, the second conveyor belt having a second color, the second color being different from the first color.

12. The system according to any of claims 10 and 11, wherein the illuminator (30, 32) comprises a first illuminator (32) upstream of a field of view of the camera (22, 22'), and a second illuminator (30) downstream of the field of view of the camera (22, 22'), with the first and second illuminators (30, 32) each generating electromagnetic energy and directing it onto the product stream in the field of view of the camera (22, 22').

13. The system according to any of claims 10 and 11, wherein the system comprises covers for the camera (22, 22') and the illuminator (30, 32) so that the system is washable with pressurized water without having liquid contact the camera (22, 22') or the illuminator (30, 32).

14. The system according to any of claims 10 and 11, wherein the camera (22, 22') comprises a plurality of cameras configured to generate the image data at one or more different wavelength regions;
optionally wherein the plurality of cameras includes a hyperspectral camera (22) and a visible light camera (22');
further optionally wherein the hyperspectral camera (22) and the visible light camera (22') are proximate to each other in the direction of motion of the forwarding device;
further optionally wherein the hyperspectral camera (22) and the visible light camera (22') are mounted at angles so that the hyperspectral camera (22) and the visible light camera (22') are directed at approximately the same spot on the forwarding device.

15. The system according to claim 14, wherein the instructions, in response to execution by the processor, further cause the processor to compensate for an offset in the image data taken by the hyperspectral camera (22) and the visible light camera (22') so that the image data from the hyperspectral camera (22) and the visible light camera (22') can be overlaid into one seamless image.

## Patentansprüche

1. Verfahren zum Detektieren von Fremdkörpern, die in einem Strom mit Nahrungsmittelprodukten vorhanden sind, wobei das Verfahren aufweist:
A) Befördern eines Produktstroms, der das Nahrungsprodukt enthält,
B) Beleuchten des Produktstroms mit einfallender elektromagnetischer Energie,
C) Erzeugen, unter Verwendung einer Kamera (22, 22'), von Rohdaten basierend auf von dem Produktstrom reflektierter elektromagnetischer Energie,
D) Prozessieren der Rohdaten mit einem auf maschinellem Lernen basierenden Klassifizierungsalgorithmus mit Regressionsanalyse, um Bilddaten zu bilden, wobei das Prozessieren der Rohdaten unüberwachtes Lernen beinhaltet, bei dem Bildelemente aufgrund ihrer Spektren in ähnliche Kategorien gruppiert werden, um klassifizierte Daten zu erzeugen, indem
(i) ein erster Teil der Rohdaten als dem Lebensmittelprodukt entsprechend klassifiziert werden,
**dadurch gekennzeichnet, dass** das Prozessieren der Rohdaten, das unüberwachtes Lernen beinhaltet, bei dem Bildelemente aufgrund ihrer Spektren in ähnliche Kategorien gruppiert werden, um klassifizierte Daten zu erzeugen, ferner beinhaltet:
(ii) einen zweiten Teil der Rohdaten als Fremdkörpern entsprechend zu klassifizieren,
(iii) einen dritten Teil der Rohdaten als Hintergrund entsprechend, der sich hinter dem Produktstrom befindet, zu klassifizieren, und
dass das Verfahren weiter beinhaltet
E) Entfernen der Fremdkörper aus dem Produktstrom.

2. Verfahren nach Anspruch 1, wobei das Erzeugen der Rohdaten durch die Kamera (2, 22') und das Prozessieren der Rohdaten ausgeführt wird, indem mehrere überlappende Bilder des Produktstroms, während der Produktstrom gefördert wird, aufgenommen werden, wobei die Bilddaten von den überlappenden Bereichen der Bilder prozessiert werden, um festzustellen, ob Daten, die als Fremdkörper in einem ersten Bild bezeichnet sind, als derselbe Fremdkörper in einem entsprechenden Bereich eines zweiten Bildes, das mit dem ersten Bild überlappt, bezeichnet sind, wobei das Prozessieren der Daten entsprechende Daten nur dann als einen Fremdkörper klassifiziert, wenn sie sowohl in dem ersten Bild als auch in dem zweiten Bild als Fremdkörper bezeichnet sind.

3. Verfahren nach einem der Ansprüche 1 und 2, wobei das Erzeugen der Rohdaten durch die Kamera (22, 22') und das Prozessieren der Rohdaten unter Verwendung einer minimalen Schwellengröße einer Region von wenigstens zwei Bildelementen mal zwei Bildelementen ausgeführt wird,
wobei optional das Erzeugen der Rohdaten durch die Kamera (22, 22') und das Prozessieren der Rohdaten auch ausgeführt werden, indem mehrere überlappende Bilder des Produktstroms, während der Produktstrom gefördert wird, aufgenommen werden, wobei die Bilddaten der überlappenden Bereiche der Bilder verarbeitet werden, um festzustellen, ob Daten, die in einem ersten Bild als Fremdkörper bezeichnet sind, auch in einem entsprechenden Bereich eines zweiten Bildes, das mit dem ersten Bild überlappt, als derselbe Fremdkörper bezeichnet sind, wobei das Prozessieren der Daten nur dann einen Fremdkörper klassifiziert, wenn (i) entsprechende Daten als derselbe Fremdkörper sowohl in dem ersten Bild als auch in dem zweiten Bild bezeichnet sind, wobei die entsprechenden Daten (ii) eine minimale Schwellengröße einer Region wenigstens von zwei Bildelementen mal zwei Bildelementen haben.

4. Prozess nach einem der Ansprüche 1-3, wobei der maschinelles Lernen beinhaltende Klassifizierungsalgorithmus auch klassifizierte Daten aus Rohdaten erzeugt, nachdem er an einem bezeichneten Trainingssatz von Bildelementen, die von Nahrungsmittelprodukt, Fremdkörpern und Hintergrund erhalten worden sind, trainiert worden ist.

5. Verfahren nach einem der Ansprüche 1-4, wobei ein Förderer (26) den Produktstrom fördert, während der Produktstrom durch einfallende elektromagnetische Energie beleuchtet wird und während die Kamera (22, 22') Rohdaten basierend auf der von dem Produktstrom reflektierten elektromagnetischen Energie erzeugt.

6. Verfahren nach einem der Ansprüche 1-5, wobei die Kamera (22, 22') eine Nahinfrarot-Hyperspektral-Zeilenkamera (22) ist;
wobei optional die Kamera (22, 22') wenigstens 400 räumliche Bildelemente hat und eine Kombination der Kamera (22, 22') und des maschinellen Lernalgorithmus dazu in der Lage ist, Fremdkörper mit einem Verhältnis bis wenigstens hinab zu 0,2% des Sichtfeldes zu detektieren,
wobei weiter optional das Verfahren nur eine Kamera verwendet.

7. Verfahren nach Anspruch 1, wobei der Produktstrom Fleischstücke enthält und die durch die Kamera (22, 22') erzeugten Rohdaten aus der reflektierten elektromagnetischen Energie in einem Wellenlängenbereich von 1200 bis 1250 nm und/oder 1500 bis 1700 nm aufgenommen werden.

8. Verfahren nach einem der Ansprüche 1-7, wobei der Produktstrom durch einen ersten Förderer, der oberhalb von der und stromaufwärts des Sichtfeldes der Kamera (22, 22') angeordnet ist, gefördert wird und wobei zugelassen wird, dass der Produktstrom an einem stromabwärtsliegenden Ende von dem ersten Förderer hinab und an einem Ort stromabwärts und unterhalb des Sichtfeldes der Kamera (22, 22') auf einen zweiten Förderer (26) herabfällt, wobei die Kamera (22, 22') Rohdaten von dem Produktstrom erzeugt, während er von dem ersten Förderer auf den zweiten Förderer (26) fällt.

9. Verfahren nach einem der Ansprüche 1-8, wobei:
A) das Fördern des Produktstroms und das Beleuchten des Produktstroms und das Erzeugen der Rohdaten in einem ersten System zum Detektieren von Fremdkörpern in dem Produktstrom durchgeführt werden, während der Produktstrom sich in einer ersten Konfiguration befindet, einschließlich eines ersten Entfernens von detektierten Fremdkörpern aus dem Produktstrom, während der Produktstrom in der ersten Konfiguration ist, gefolgt von
B) Neuanordnen des Produktstroms in eine zweite Konfiguration, gefolgt von
C) Fördern des Produktstroms in der zweiten Konfiguration durch ein zweites System zum Detektieren von Fremdkörpern in dem Produktstrom, während der Produktstrom in der zweiten Konfiguration ist, einschließlich eines zweiten Entfernens von jeglichen detektierten Fremdkörpern aus dem Produktstrom, während der Produktstrom in der zweiten Konfiguration ist.

10. System zum Detektieren von einem Fremdkörper, der in einem Produktstrom mit einem Nahrungsmittelprodukt enthalten ist, wobei das System aufweist:
A) eine Fördervorrichtung, die dazu ausgestaltet ist, um den Produktstrom zu fördern,
B) eine Beleuchtungsvorrichtung (30, 32), die dazu ausgestaltet ist, um einfallende elektromagnetische Energie zu erzeugen und die elektromagnetische Energie auf den Produktstrom zu richten,
C) eine Kamera (22, 22'), die dazu eingerichtet ist, basierend auf von dem Produktstrom reflektierter elektromagnetische Energie Rohdaten zu erzeugen,
D) in einem Speicher gespeicherte Befehle, um aus den Rohdaten unter Anwendung eines maschinelles Lernen anwendenden Klassifizierungsalgorithmus mit Regressionsanalyse und mit unüberwachtem Lernen Bilddaten zu erzeugen, was das Gruppieren von Bildelementen basierend auf ihren Spektren in ähnliche Kategorien beinhaltet, um klassifizierte Daten zu erzeugen, wobei die Befehle bei Ausführung durch einen Prozessor den Prozessor dazu veranlassen,
(i) einen ersten Teil der Rohdaten als dem Nahrungsmittelprodukt entsprechend zu klassifizieren,
**dadurch gekennzeichnet, dass** die Befehle, bei Ausführung durch den Prozessor, den Prozessor weiter dazu veranlassen,
(ii) einen zweiten Teil der Rohdaten als dem Fremdkörper entsprechend zu klassifizieren,
(iii) einen dritten Teil der Rohdaten als einem Hintergrund, der sich hinter dem Produktstrom befindet, entsprechend zu klassifizieren,
und dass das System dazu eingerichtet ist, den Fremdkörper aus dem Produktstrom zu entfernen.

11. System nach Anspruch 10, wobei die Fördervorrichtung ein Förderband (26) aufweist,
wobei optional das Förderband (26) ein erstes Förderband mit einer ersten Farbe ist und das System weiter ein zweites Förderband stromaufwärts des ersten Förderbands aufweist, wobei das zweite Förderband eine zweite Farbe hat, wobei die zweite Farbe sich von der ersten Farbe unterscheidet.

12. System nach einem der Ansprüche 10 und 11, wobei die Beleuchtungsvorrichtung (30, 32) eine erste Beleuchtungsvorrichtung (32) stromaufwärts des Sichtfeldes der Kamera (22, 22') und eine zweite Beleuchtungsvorrichtung (30) stromabwärts des Sichtfeldes der Kamera (22, 22') aufweist, wobei die ersten und zweiten Beleuchtungsvorrichtungen (30, 32) jeweils elektromagnetische Energie erzeugen und sie auf den Produktstrom in dem Sichtfeld der Kamera (22, 22') richten.

13. System nach einem der Ansprüche 10 und 11, wobei das System Abdeckungen für die Kamera (22, 22') und die Beleuchtungsvorrichtung (30, 32) aufweist, wobei das System mit Druckwasser abwaschbar ist, ohne dass die Kamera (22, 22') oder die Beleuchtungsvorrichtung (30, 32) in Kontakt mit Flüssigkeit kommt.

14. System nach einem der Ansprüche 10 und 11, wobei die Kamera (22, 22') eine Mehrzahl von Kameras umfasst, um die Bilddaten bei einer oder mehreren verschiedenen Wellenlängenregionen zu erzeugen,
wobei optional die Mehrzahl von Kameras eine Hyperspektralkamera (22) und eine Kamera (22') für sichtbares Licht aufweist,
wobei weiter optional die Hyperspektralkamera (22) und die Kamera (22') für sichtbares Licht nahe zueinander in der Bewegungsrichtung der Fördervorrichtung angeordnet sind, wobei weiter optional die Hyperspektralkamera (22) und die Kamera (22') für sichtbares Licht unter Winkeln montiert sind, so dass die Hyperspektralkamera (22) und die Kamera (22') für sichtbares Licht näherungsweise auf dieselbe Stelle auf der Fördervorrichtung gerichtet sind.

15. System nach Anspruch 14, wobei die Befehle, bei Ausführung durch den Prozessor, den Prozessor weiter dazu veranlassen, eine Versetzung in den von der Hyperspektralkamera (22) und der Kamera (22') für sichtbares Licht aufgenommenen Bilddaten zu kompensieren, so dass die Bilddaten von der Hyperspektralkamera (22) und der Kamera (22') für sichtbares Licht zu einem nahtlosen Bild übereinandergelegt werden können.

## Revendications

1. Procédé de détection de corps étrangers présents dans un flux comprenant un produit alimentaire, le procédé comprenant :
A) le transfert d'un flux de produits comprenant le produit alimentaire;
B) l'éclairage du flux de produits avec une énergie électromagnétique incidente;
C) la génération de données brutes sur la base d'une énergie électromagnétique réfléchie à partir du flux de produits, à l'aide d'une caméra (22, 22');
D) le traitement des données brutes avec un algorithme de classification d'apprentissage automatique avec une analyse de régression pour former des données d'image, le traitement des données brutes incluant un apprentissage non supervisé comprenant le regroupement de pixels dans des catégories similaires en fonction de leurs spectres, afin de générer des données classées par:
(i) le classement d'une première partie des données brutes comme correspondant au produit alimentaire ; **caractérisé en ce que** le traitement des données brutes incluant un apprentissage non supervisé comprenant le regroupement de pixels dans des catégories similaires en fonction de leurs spectres, afin de générer des données classées inclut en outre:
(ii) le classement d'une deuxième partie des données brutes comme correspondant aux corps étrangers ;
(iii) le classement d'une troisième partie des données brutes comme correspondant à l'arrière-plan qui est derrière le flux de produits; et
**en ce que** le procédé comprend en outre
E) le retrait des corps étrangers du flux de produits.

2. Procédé selon la revendication 1, dans lequel la génération de données brutes par la caméra (22, 22'), et le traitement des données brutes, sont effectués en prenant de multiples images superposées du flux de produits alors que le flux de produits est transféré, les données d'image provenant des parties superposées des images étant traitées pour déterminer si les données indiquées comme étant un corps étranger dans une première image sont également indiquées comme étant le même corps étranger dans une partie correspondante d'une seconde image qui se superpose à la première image, le traitement de données classant uniquement comme un corps étranger les données correspondantes qui sont indiquées comme étant le corps étranger à la fois sur la première et la seconde image.

3. Procédé selon l'une quelconque des revendications 1 et 2, dans lequel la génération de données brutes par la caméra (22, 22'), et le traitement des données brutes, sont effectués en utilisant une taille seuil minimale d'au moins 2 pixels dans une région de 2 pixels par 2 pixels; éventuellement dans lequel la génération de données brutes par la caméra (22, 22'), et le traitement des données brutes, sont également effectués en prenant de multiples images superposées du flux de produits alors que le flux de produits est transféré, les données d'image provenant des parties superposées des images étant traitées pour déterminer si les données indiquées comme étant un corps étranger dans une première image sont également indiquées comme étant le même corps étranger dans une partie correspondante d'une seconde image qui se superpose à la première image, le traitement de données classant uniquement comme un corps étranger : (i) les données correspondantes qui sont indiquées comme étant le même corps étranger à la fois sur la première et la seconde image, lesquelles données correspondantes satisfont (ii) une taille seuil minimale d'au moins 2 pixels dans une région de 2 pixels par 2 pixels.

4. Procédé selon l'une quelconque des revendications 1-3, dans lequel l'algorithme de classification d'apprentissage automatique génère également des données classées à partir de données brutes une fois après avoir été entraîné sur un ensemble de pixels d'entraînement étiquetés obtenus à partir d'aliments, de corps étrangers et d'un arrière-plan.

5. Procédé selon l'une quelconque des revendications 1-4, dans lequel un transporteur (26) transmet le flux de produits alors que le flux de produits est éclairé par l'énergie électromagnétique incidente, et alors que la caméra (22, 22') génère les données brutes sur la base de l'énergie électromagnétique réfléchie à partir du flux de produits.

6. Procédé selon l'une quelconque des revendications 1-5, dans lequel la caméra (22, 22') est une caméra hyperspectrale à balayage linéaire proche infrarouge (22);
éventuellement dans lequel la caméra (22, 22') présente au moins 400 pixels spatiaux et une combinaison de la caméra (22, 22') et de l'algorithme d'apprentissage automatique est capable de détecter des corps étrangers à un rapport au moins aussi faible que 0,2 % du champ de vision;
en outre éventuellement dans lequel le procédé utilise une seule caméra.

7. Procédé selon la revendication 1, dans lequel le flux de produits comprend des morceaux de viande et les données brutes générées par la caméra (22, 22') sont des données prises de l'énergie électromagnétique réfléchie dans une plage de longueurs d'onde de 1200 à 1250 m et/ou 1500 à 1700 nm.

8. Procédé selon l'une quelconque des revendications 1-7, dans lequel le flux de produits est transféré par un premier transporteur positionné au-dessus et en amont d'un champ de vision de la caméra (22, 22'), et le flux de produits peut tomber d'une extrémité en aval du premier transporteur et sur un second transporteur (26) à un emplacement en aval et en dessous du champ de vision de la caméra (22, 22'), la caméra (22, 22') générant des données brutes du flux de produits lorsqu'il tombe du premier transporteur sur le second transporteur (26).

9. Procédé selon l'une quelconque des revendications 1-8, dans lequel:
A) le transfert du flux de produits et l'éclairage du flux de produits et la génération des données brutes sont réalisés sur un premier système de détection de corps étrangers dans le flux de produits alors que le flux de produits est dans une première configuration, incluant un premier retrait de quelconques corps étrangers détectés du flux de produits alors que le flux de produits est dans la première configuration, suivis par
B) la reconfiguration du flux de produits dans une seconde configuration, suivie par
C) le transfert du flux de produits dans la seconde configuration par le biais d'un second système de détection de corps étrangers dans le flux de produits alors que le flux de produits est dans la seconde configuration, incluant un second retrait de quelconques corps étrangers détectés du flux de produits alors que le flux de produits est dans la seconde configuration.

10. Système de détection d'un corps étranger présent dans un flux de produits comprenant un produit alimentaire, le système comprenant:
A) un dispositif de transfert configuré pour transférer le flux de produits;
B) un illuminateur (30, 32) configuré pour générer une énergie électromagnétique incidente et pour diriger l'énergie électromagnétique contre le flux de produits ;
C) une caméra (22, 22') agencée pour générer des données brutes sur la base d'une énergie électromagnétique réfléchie à partir du flux de produits;
D) des instructions stockées dans une mémoire pour former des données d'image à partir des données brutes à l'aide d'un algorithme de classification d'apprentissage automatique avec une analyse de régression et incluant un apprentissage non supervisé comprenant le regroupement de pixels en catégories similaires en fonction de leurs spectres, afin de générer des données classées, dans lequel les instructions, en réponse à une exécution par un processeur, amènent le processeur à:
(i) classer une première partie des données brutes comme correspondant au produit alimentaire;
**caractérisé**
**en ce que** les instructions, en réponse à une exécution par le processeur, amènent en outre le processeur à:
(ii) classer une deuxième partie des données brutes comme correspondant au corps étranger;
(iii) classer une troisième partie des données brutes comme correspondant à un arrière-plan qui est derrière le flux de produits;
et **en ce que** le système est agencé pour retirer le corps étranger du flux de produits.

11. Système selon la revendication 10, dans lequel le dispositif de transfert comprend une bande transporteuse (26); éventuellement dans lequel la bande transporteuse (26) est une première bande transporteuse présentant une première couleur, et le système comprend en outre une seconde bande transporteuse en amont de la première bande transporteuse, la seconde bande transporteuse présentant une seconde couleur, la seconde couleur étant différente de la première couleur.

12. Système selon l'une quelconque des revendications 10 et 11, dans lequel l'illuminateur (30, 32) comprend un premier illuminateur (32) en amont d'un champ de vision de la caméra (22, 22'), et un second illuminateur (30) en aval du champ de vision de la caméra (22, 22'), les premier et second illuminateurs (30, 32) générant chacun une énergie électromagnétique et la dirigeant sur le flux de produits dans le champ de vision de la caméra (22, 22').

13. Système selon l'une quelconque des revendications 10 et 11, dans lequel le système comprend des caches pour la caméra (22, 22') et l'illuminateur (30, 32) de sorte que le système est lavable avec de l'eau sous pression sans que du liquide n'entre en contact avec la caméra (22, 22') ou l'illuminateur (30, 32).

14. Système selon l'une quelconque des revendications 10 et 11, dans lequel la caméra (22, 22') comprend une pluralité de caméras configurées pour générer les données d'image au niveau d'une ou plusieurs régions de longueurs d'onde différentes ;
éventuellement dans lequel la pluralité de caméras inclut une caméra hyperspectrale (22) et une caméra à lumière visible (22');
en outre éventuellement dans lequel la caméra hyperspectrale (22) et la caméra à lumière visible (22') sont proches l'une de l'autre dans la direction de déplacement du dispositif de transfert;
en outre éventuellement dans lequel la caméra hyperspectrale (22) et la caméra à lumière visible (22') sont montées à des angles tels que la caméra hyperspectrale (22) et la caméra à lumière visible (22') sont dirigées au niveau du même point environ sur le dispositif de transfert.

15. Système selon la revendication 14, dans lequel les instructions, en réponse à une exécution par le processeur, amènent en outre le processeur à compenser un écart dans les données d'image prises par la caméra hyperspectrale (22) et la caméra à lumière visible (22') de sorte que les données d'image provenant de la caméra hyperspectrale (22) et la caméra à lumière visible (22') peuvent être superposées en une image homogène.
